# FASCICULE DE BREVET EUROPEEN

(11) **EP 3 253 602 B1**
(45) Date de publication et mention de la délivrance du brevet: **18.09.2019**
(21) Numéro de dépôt: 16705258.8
(22) Date de dépôt: 05.02.2016
(51) Int. Cl.: B60J 1/02, B60J 1/00, B60J 10/16, B60J 10/18, B60J 10/27, B60J 10/30, B60J 10/70

(54) **VITRAGE FEUILLETE COMPRENANT UN CORDON PROFILE DE CLIPPAGE**
VERBUNDGLASSCHEIBE MIT PROFILIERTEM KLEMMWULST
LAMINATED GLAZING COMPRISING A PROFILED CLIPPING BEAD

(30) Priorité: 05.02.2015 FR 1550890
(43) Date de publication de la demande: 13.12.2017
(73) Titulaire: Saint-Gobain Glass France, 92400 Courbevoie (FR)
(72) Inventeur: DE PAOLI, Martial, 60400 Cuts (FR); LAMOUREUX, Laurent, 60170 Ribecourt-dreslincourt (FR); ARTZNER, Emmanuelle, 92160 Antony (FR); SILVESTRINI, Laurent, 60400 Bussy (FR)
(74) Mandataire: Saint-Gobain Recherche
(86) Numéro de dépôt international: PCT/FR2016/050247
(87) Numéro de publication internationale: WO 2016/124868

(56) Documents cités:
- EP-A1- 3 037 292
- WO-A1-2013/127977
- WO-A2-2006/002891
- DE-U1-202008 006 986

## Description

La présente invention concerne un vitrage, et notamment un vitrage de véhicule, comprenant un élément vitré feuilleté comprenant une feuille de verre extérieure, une feuille de verre intérieure et une feuille intercalaire de matière plastique située entre lesdites deux feuilles de verre.

Comme pour tout élément vitré feuilleté :
- la feuille de verre extérieure présente une face extérieure, un chant et une face intercalaire qui est orientée vers la feuille intercalaire de matière plastique,
- la feuille de verre intérieure présente une face intercalaire qui est orientée vers la feuille intercalaire de matière plastique, un chant et une face intérieure.

Le vitrage selon l'invention comporte le long d'au moins une partie d'au moins un bord un cordon profilé comportant une rainure pour le clippage d'une pièce de couverture sur ledit cordon profilé, ladite pièce de couverture comportant, vue en coupe transversale, un harpon pénétrant dans ladite rainure lors du clippage.

Il est connu en effet pour assurer le positionnement et/ou la fixation d'une pièce de couverture sur un élément vitré, d'utiliser un tel cordon profilé comportant une rainure.

Ce cordon profilé est généralement fixé à la face intérieure de l'élément vitré à l'aide d'une aile intérieure qui est collée contre cette face intérieure.

Pour une bonne adhésion de cette aile intérieure à l'élément vitré qui autorise un clippage en force dans la rainure, cette aile intérieure doit être relativement large (lorsque le cordon profilé est observé en coupe transversale, comme c'est le cas dans la majorité des documents de l'art antérieur).

L'art antérieur connaît deux types de situations :
- lorsque la pièce de couverture vient couvrir au moins la rainure en dépassant au-dessus de la face extérieure de l'élément vitré, comme par exemple dans les demandes de brevets EP 945 296, DE 3606566 ; et
- lorsque la pièce de couverture vient couvrir au moins la rainure sans dépasser au-dessus de la face extérieure de l'élément vitré, comme par exemple dans les demandes de brevets WO 2001/045974 ou WO 2001/85481.

Dans la première situation, la pièce de couverture doit être suffisamment large, pour couvrir au moins l'aile intérieure afin qu'elle ne soit pas visible de l'extérieur et/ou une bande de masquage est réalisée plus à l'extérieure que l'aile intérieure.

Dans la seconde situation, une bande de masquage est réalisée plus à l'extérieure que l'aile intérieure pour couvrir au moins l'aile intérieure afin qu'elle ne soit pas visible de l'extérieur.

Ces deux situations ont en commun que la pièce de couverture et/ou la bande de masquage sont, elles-mêmes ou ensemble, au moins aussi large que l'aile intérieure et en général plus large que l'aile intérieure ; de ce fait, le clair de vue à travers l'élément vitré est diminué.

En outre, du fait de la présence de l'aile intérieure au coin entre le chant de la feuille de verre intérieure et sa face intérieure, le cordon de colle qui permet de coller le vitrage à la carrosserie adjacente doit être positionné plus vers le centre du vitrage ; or, ce cordon de colle doit lui aussi être masqué de l'extérieur.

Ainsi, il est courant de considérer que le long du bord d'un vitrage équipé d'un cordon profilé à rainure, c'est une bande de 30 à 35 mm de large qui ne peut pas être utilisée pour permettre de laisser passer la lumière et qui diminue ainsi le clair de vue.

La présente invention a pour but de remédier à ces inconvénients en proposant un vitrage comportant un cordon profilé qui permet en clippage en force, et donc qui est solidement attaché à l'élément vitré, tout en permettant d'augmenter le clair de vue à travers l'élément vitré.

La présente invention se rapporte ainsi à un vitrage et notamment un vitrage de véhicule, selon la revendication 1. Ce vitrage compred un élément vitré feuilleté comprenant une feuille de verre extérieure, une feuille de verre intérieure et une feuille intercalaire de matière plastique située entre lesdites deux feuilles de verre, (directement au contact ou avec interposition d'une autre feuille de matière plastique),
- ladite feuille de verre extérieure présentant une face extérieure, un chant et une face intercalaire qui est orientée vers ladite feuille intercalaire de matière plastique,
- ladite feuille de verre intérieure présentant une face intercalaire qui est orientée vers ladite feuille intercalaire de matière plastique, un chant et une face intérieure,
- ledit vitrage comportant le long d'au moins une partie d'au moins un bord un cordon profilé comportant une rainure pour le clippage d'une pièce de couverture sur ledit cordon profilé, ladite pièce de couverture comportant, vue en coupe transversale, un harpon pénétrant dans ladite rainure lors du clippage.

Ce vitrage est remarquable en ce que ledit cordon profilé comporte, vu en coupe transversale, une aile intercalaire située entre ladite face intercalaire de ladite feuille de verre extérieure et ladite face intercalaire de ladite feuille de verre intérieure.

Par l'expression « une aile intercalaire située entre ladite face intercalaire de ladite feuille de verre extérieure et ladite face intercalaire de ladite feuille de verre intérieure », il faut comprendre que l'aile intercalaire s'étend selon sa largeur transversale entre ladite face intercalaire de ladite feuille de verre extérieure et ladite face intercalaire de ladite feuille de verre intérieure.

Ladite aile intercalaire est au contact direct ou indirect (et dans ce cas par l'intermédiaire d'une matière adhésive) de ladite face intercalaire de ladite feuille de verre extérieure et elle est au contact direct ou indirect (et dans ce cas par l'intermédiaire d'une matière adhésive) de ladite face intercalaire de ladite feuille de verre intérieure.

D'une manière complètement surprenante, il a ainsi été découvert qu'il était possible de lier un cordon profilé à rainure à un élément vitré feuilleté en utilisant un espace ménagé entre la feuille de verre extérieur et la feuille de verre intérieur de cet élément vitré feuilleté et que la rainure pouvait alors être utilisée pour réaliser un clippage fiable, c'est-à-dire que l'introduction d'un harpon dans la rainure ne détruit pas cette liaison entre le cordon profilé et l'élément vitré feuilleté.

L'espace ménagé entre la feuille de verre extérieur et la feuille de verre intérieur est de préférence réalisé en utilisant une feuille intercalaire de matière plastique présentant, le long au moins du bord de l'élément vitré équipé du cordon profilé, un chant en retrait par rapport aux chants des feuilles de verre qui eux, sont à l'aplomb l'un de l'autre.

La cohésion de l'élément vitré feuilleté est ainsi supérieure aux dommages susceptibles d'être engendrés par le clippage d'un harpon dans la rainure d'un tel cordon profilé à aile intercalaire qui est intercalée entre la feuille de verre extérieure et la feuille de verre intérieure d'un élément vitré feuilleté.

Pour la fiabilité mécanique du clippage, il est préférable que ladite aile intercalaire présente une largeur comprise entre 2,0 et 10,0 mm, voire entre 2,0 et 6,0 mm, voire comprise entre 3,0 et 5,0 mm. Cette largeur correspond à la largeur de l'aile intercalaire qui s'étend entre lesdites faces intercalaires des feuilles de verre, c'est-à-dire à partir du chant des feuilles de verre et en sens centripète.

La présence de l'aile intercalaire permet de supprimer l'utilisation d'une aile intérieure, ou d'une aile extérieure, ou des deux ; A tout le moins, elle permet de diminuer la largeur d'une telle aile intérieure et/ou extérieure et permet de diminuer la largeur du masquage le long du bord du vitrage.

Dans une variante indépendante, ladite aile intercalaire peut être venue de matière avec ladite rainure et comporte, de préférence, un tenon plat qui est à l'intérieur de l'aile intercalaire et qui n'entre en contact ni avec ladite face intercalaire de ladite feuille de verre extérieure ni avec ladite face intercalaire de ladite feuille de verre intérieure.

Dans une variante indépendante de la précédente, ladite aile intercalaire est constituée d'un tenon ondulé, ledit tenon ondulé s'étendant, de préférence à l'intérieur de la matière constitutive de ladite rainure. De préférence, Ce tenon ondulé entre en contact avec ladite face intercalaire de ladite feuille de verre extérieure et avec ladite face intercalaire de ladite feuille de verre intérieure.

Ladite aile intercalaire n'entre pas en contact avec ledit chant de ladite feuille intercalaire de matière plastique, afin que la tension interne lors du clippage n'endommage pas le feuilletage.

Dans une variante indépendante des précédentes, ledit cordon profilé est situé contre ledit chant de ladite feuille de verre extérieure.

Dans une variante indépendante des précédentes, ledit cordon profilé est situé contre ledit chant de ladite feuille de verre intérieure.

Dans une variante indépendante des précédentes, ledit cordon profilé est situé le long de deux bords latéraux dudit élément vitré et/ou le long d'un bord supérieur dudit élément vitré. Dans une autre variante indépendante, ledit cordon profilé est situé uniquement le long d'un bord inférieur dudit élément vitré.

Dans une variante indépendante des précédentes, ladite rainure est située en vis-à-vis du chant de ladite feuille de verre extérieure et/ou en vis-à-vis du chant de ladite feuille de verre intérieure.

Ladite aile intercalaire présente, de préférence, une épaisseur égale à l'épaisseur entre ladite feuille de verre extérieure et ladite feuille de verre intérieure et en particulier égale à l'épaisseur de ladite feuille intercalaire de matière plastique et notamment égale à 0,76 mm. De préférence, l'aile intercalaire est ainsi simplement maintenue entre la face intercalaire de la feuille de verre extérieure et la face intercalaire de la feuille de verre intérieure, par coincement, de préférence sans utiliser de matière adhésive entre l'aile intercalaire et la feuille intercalaire ; toutefois, il est possible que l'espace entre l'aile intercalaire et le chant de la feuille intercalaire soit rempli d'une matière adhésive comme de la colle.

Dans cette variante, ladite aile intercalaire est au contact d'une part de ladite face intercalaire de ladite feuille de verre extérieure et d'autre part de ladite face intercalaire de ladite feuille de verre intérieure.

Dans une variante alternative à la précédente, ladite aile intercalaire présente une épaisseur inférieure à l'épaisseur entre ladite feuille de verre extérieure et ladite feuille de verre intérieure.

Dans cette variante alternative, ladite aile intercalaire n'est pas au contact direct de ladite face intercalaire de ladite feuille de verre extérieure et/ou n'est pas au contact direct de ladite face intercalaire de ladite feuille de verre intérieure : une matière adhésive, tel qu'un cordon de colle, peut être située entre ladite aile intercalaire et ladite face intercalaire de ladite feuille de verre extérieure et/ou entre ladite aile intercalaire et ladite face intercalaire de ladite feuille de verre intérieure.

Dans un mode de réalisation particulier, ladite rainure est située au-dessus de ladite face extérieure de ladite feuille de verre extérieure ; ladite rainure est alors, de préférence, venue de matière avec une aile extérieure.

Dans une variante toute particulière ledit cordon profilé présente, en coupe transversale, une forme de m tourné à 90 °, avec un premier creux du m pour accueillir le harpon de ladite pièce de couverture et un deuxième creux du m qui enchâsse ladite feuille de verre extérieure.

Ledit cordon profilé peut comporter, vu en coupe transversale, une aile extérieure située au-dessus (directement sur, ou indirectement sur et avec insertion d'une bande d'adhésion formée par une couche de colle ou un ruban adhésif) de ladite face extérieure de ladite feuille de verre extérieure.

Ledit cordon profilé peut par ailleurs comporter, vu en coupe transversale, une aile intérieure située en dessous (directement sous, ou indirectement sous et avec insertion d'une bande d'adhésion formée par une couche de colle ou un ruban adhésif) de ladite face intérieure de ladite feuille de verre intérieure.

Dans ces deux derniers cas, ladite aile extérieure et/ou ladite aile intérieure comporte de préférence :
- une portion charnière en une matière polymérique souple, comme par exemple du TPE, présentant de préférence une largeur comprise entre 0,5 et 2,0 mm, ou
- un rétrécissement de section, présentant de préférence une épaisseur de l'ordre de la moitié de l'épaisseur de ladite aile extérieure et/ou de ladite aile intérieure qui le porte et ce, sur une largeur comprise de préférence entre 0,5 et 2,0 mm.

Ces deux éléments permettent de soulever l'aile par rapport à la face de la feuille de verre adjacente, afin de faciliter le positionnement et la fixation du cordon profilé.

De préférence, ladite aile extérieure et/ou ladite aile intérieure comporte en outre une bande d'adhésion formée par une couche de colle ou un ruban adhésif double face et qui est située entre une partie centripète de l'aile et la face de la feuille de verre adjacente, afin de permettre de fixer cette aile à la feuille de verre adjacente.

Cette bande d'adhésion permet la fixation définitive du cordon profilé à l'élément vitré après ajustement éventuel de sa position vis-à-vis de l'élément vitré.

Ladite aile extérieure peut comporter une butée supérieure s'étendant perpendiculairement pour permettre le positionnement et la mise en référence de ladite pièce de couverture.

Dans une autre variante, vu en coupe transversale, ladite face extérieure de ladite feuille de verre extérieure est libre en vis-à-vis de ladite rainure et ladite face intérieure de ladite feuille de verre intérieure est libre en vis-à-vis de ladite rainure et ladite aile intercalaire présente une épaisseur inférieure à l'épaisseur de ladite feuille intercalaire de matière plastique. Ledit cordon profilé ne comporte alors ni aile extérieure, ni aile intérieure.

Dans une variante toute spécifique de l'invention, ou indépendamment de l'invention, ledit vitrage comporte le long d'au moins une partie d'au moins un bord un cordon profilé comportant une rainure pour le clippage d'une pièce de couverture sur ledit cordon profilé, ladite pièce de couverture comportant, vue en coupe transversale, un harpon pénétrant dans ladite rainure lors du clippage et ledit harpon comporte, vue en coupe transversale, une lèvre orientée vers l'extérieur de ladite rainure, ladite lèvre étant de préférence en un matériau différent de celui dudit harpon.

Ledit harpon peut comporter, vue en coupe transversale, une butée frontale située en dehors de ladite rainure afin de limiter la hauteur de pénétration du harpon dans la rainure.

Dans une variante toute spécifique de l'invention, ou indépendamment de l'invention, ledit vitrage comporte le long d'au moins une partie d'au moins un bord un cordon profilé comportant une rainure pour le clippage d'une pièce de couverture sur ledit cordon profilé, ladite pièce de couverture comportant, vue en coupe transversale, un harpon pénétrant dans ladite rainure lors du clippage et ladite rainure comporte un fond qui forme un U asymétrique, avec un rayon de courbure plus grand d'un côté :
- d'un côté proche d'une feuillure lorsque la rainure est en vis-à-vis d'un chant d'une feuille de verre, ou
- d'un côté éloigné d'une face extérieure de l'élément vitré lorsque la rainure est située au-dessus de cette face extérieure.

Ainsi, cette partie du fond avec le rayon de courbure plus grand permet de diminuer l'espace entre la rainure et la feuillure adjacente et augmente encore la compacité du système de clippage.

De préférence, le cordon profilé, qui comprend la rainure et l'aile intercalaire, ainsi que, éventuellement, une aile extérieure et/ou une aile intérieure, est préfabriqué : il est fabriqué, par exemple par extrusion au travers d'une filière, indépendamment de la fabrication de l'élément vitré (indépendamment du feuilletage), puis est fixé à l'élément vitré.

La pièce de couverture est une pièce destinée à être positionnée plus à l'extérieur que le cordon profilé.

Avantageusement, la présente invention permet de proposer un vitrage à cordon profilé de clippage qui est fiable, tout en diminuant la surface opaque nécessaire pour cacher la fixation de ce cordon, c'est-à-dire en permettant de diminuer la largeur de la pièce de couverture et/ou en permettant de diminuer la largeur d'une bande de masquage.

La présente invention permet ainsi de réaliser un système de clippage compacte, tout en étant fiable.

Avec la présente invention, le long du bord d'un vitrage équipé du cordon profilé à rainure selon l'invention, c'est seulement une bande de 20 à 25 mm de large qui ne peut pas être utilisée pour permettre de laisser passer la lumière et qui diminue alors le clair de vue.

On décrira ci-après, à titre d'exemple non limitatif, plusieurs formes d'exécution de la présente invention, en référence au dessin annexé sur lequel :
- la figure 1 est une vue en coupe d'un premier mode de réalisation de l'assemblage, à proximité d'une feuillure de carrosserie, d'une pièce de couverture sur un cordon profilé suivant l'invention à rainure latérale et aile extérieure comportant une portion charnière ;
- la figure 2 est une vue en coupe d'une variante du mode de la figure 1, à tenon plat, cette variante étant illustrée sans la feuillure de carrosserie et avec uniquement le harpon de la pièce de couverture ;
- la figure 3 est une vue en coupe d'une variante du mode de la figure 1, à tenon ondulé, cette variante étant illustrée sans la feuillure de carrosserie et avec uniquement le harpon de la pièce de couverture ;
- la figure 4 est une vue en perspective de la variante de la figure 3, illustrée sans l'élément vitré ;
- la figure 5 est une vue en coupe d'une variante du mode de la figure 1, à aile extérieure comportant un rétrécissement de section, cette variante étant illustrée sans la feuillure de carrosserie et avec uniquement le harpon de la pièce de couverture ;
- la figure 6 est une vue en coupe d'une variante du mode de la figure 1, à avaloir centrifuge étendu, cette variante étant illustrée sans la feuillure de carrosserie et avec uniquement le harpon de la pièce de couverture ;
- la figure 7 est une vue en coupe d'une variante du mode de la figure 1, à rainure latérale espacée du chant de l'élément vitré, cette variante étant illustrée sans la feuillure de carrosserie et avec uniquement le harpon de la pièce de couverture ;
- la figure 8 est une vue en coupe d'une variante du mode de la figure 1, à harpon comportant une lèvre, cette variante étant illustrée sans la feuillure de carrosserie et avec uniquement le harpon de la pièce de couverture ;
- la figure 9 est une vue en coupe d'une variante du mode de la figure 1, à aile intercalaire collée, sans portion charnière et sans aile extérieure ni aile intérieure, cette variante étant illustrée sans la feuillure de carrosserie et avec uniquement le harpon de la pièce de couverture ;
- la figure 10 est une vue en coupe d'une variante du mode de la figure 1, à harpon comportant une butée frontale et à aile extérieure comportant une butée supérieure ;
- la figure 11 est une vue en coupe similaire à celle de la figure 1, sans la pièce de couverture, illustrant un d'angle de fond de feuillure avec un rayon de courbure plus grand du côté de la feuillure et la réduction de distance en conséquence ;
- la figure 12 est une vue en coupe d'un second mode de réalisation de l'assemblage d'une pièce de couverture sur un cordon profilé suivant l'invention à rainure supérieure centripète et aile extérieure comportant une portion charnière, ce mode étant illustré sans la feuillure de carrosserie et avec uniquement le harpon de la pièce de couverture ;
- la figure 13 est une vue en coupe d'une variante du mode de la figure 12, à rainure supérieure centrifuge ;
- la figure 14 est une vue en coupe d'un troisième mode de réalisation de l'assemblage d'une pièce de couverture sur un cordon profilé suivant l'invention à rainure latérale, sans aile extérieure et à aile intérieure comportant une portion charnière ;
- la figure 15 est une vue en coupe d'une variante des figures 12 et 13 qui est à rainure supérieure située au-dessus de la face extérieure de la feuille de verre extérieure et aile extérieure comportant une portion charnière, ce mode étant illustré avec la feuillure de carrosserie et avec la pièce de couverture complète ; et
- la figure 16 est une vue en coupe d'une variante de la figure 9 car elle est sans portion charnière, mais à aile extérieure collée contre la face extérieure de la feuille de verre extérieure.

A l'intérieur de chaque figure, les proportions entre les différents éléments sont respectées et les éléments en arrière plan ne sont en général pas représentés, afin de faciliter leur lecture. Les mêmes références désignent les mêmes éléments d'une figure à l'autre.

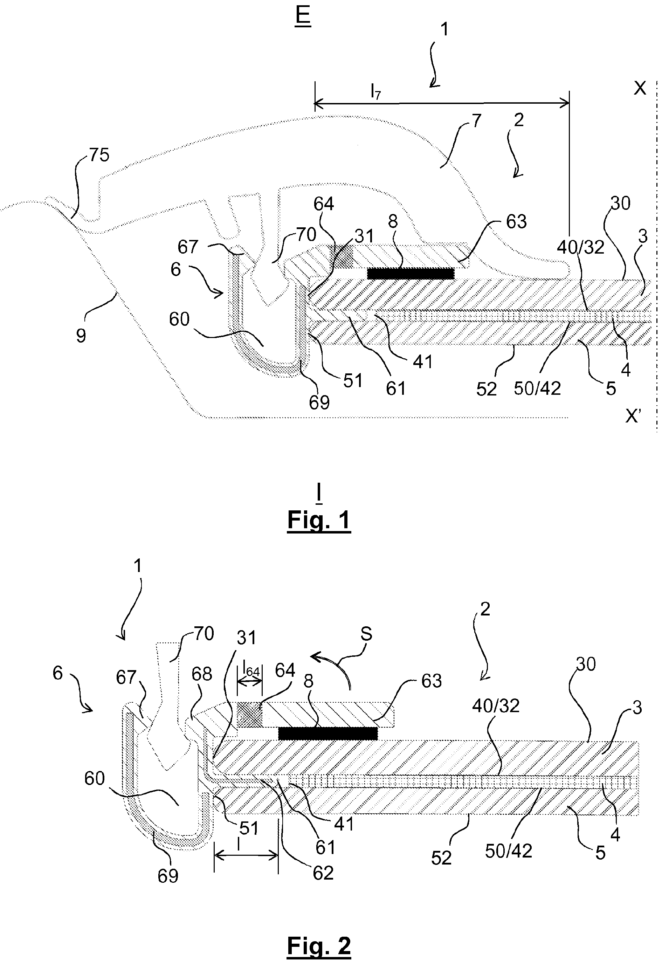

La présente invention se rapporte à un vitrage 1, tel que visible en partie en figure 1, comprenant un élément vitré 2 feuilleté comprenant une feuille de verre extérieure 3, une feuille de verre intérieure 5 et une feuille intercalaire de matière plastique 4 située entre lesdites deux feuilles de verre.

La présente invention est décrite à titre d'exemple dans le cadre d'une application comme vitrage de véhicule, ce vitrage réalisant une séparation entre un espace extérieur E qui est extérieur au véhicule et un espace intérieur I qui est intérieur au véhicule. Les notions de « extérieur » et « intérieur » sont donc considérée par rapport respectivement à cet espace extérieur E et cet espace intérieur I.

Dans les figures, les feuilles de verre sont illustrée chacune avec un chant arrondi ; toutefois, ces chants peuvent être droits, avec les arêtes entre les chants et les faces qui sont alors à angle droit.

La présente invention est décrite en particulier en étant appliquée à un pare-brise de véhicule et plus précisément dans le cadre d'une application à un bord gauche d'un pare-brise de véhicule, comme visible en figure 1 ; la figure 1 étant une vue en coupe horizontale partielle du vitrage 1 installé dans une baie de carrosserie.

Dans le cadre du présent document, la notion de « centripète » et celle de « centrifuge » est à considérer par rapport à l'axe longitudinal central d'avancé du véhicule équipé du vitrage selon l'invention en tant que pare-brise, c'est-à-dire l'axe généralement appelé l'axe X-X' du véhicule, tel qu'on peut le voir en figure 1 ; le sens centrifuge est perpendiculaire à cet axe et en direction de cet axe alors que le sens centripète est perpendiculaire à cet axe et à l'opposé, en s'éloignant de cet axe.

Le vitrage 1 est destiné à fermer une baie qui est ici ménagée dans une carrosserie du véhicule ; un bord de cette baie - en l'occurrence un bord latéral gauche - est illustré en figure 1 par une feuillure 9.

L'élément vitré 2 du vitrage 1 est nécessairement un vitrage feuilleté qui comporte, de l'extérieur vers l'intérieur, au moins : la feuille de verre extérieure 3, la feuille intercalaire de matière plastique 4 et la feuille de verre intérieure 5 ; toutefois, il est possible qu'au moins une autre feuille soit intercalée entre la feuille de verre extérieure 3 et la feuille intercalaire de matière plastique 4 ou entre la feuille intercalaire de matière plastique 4 et la feuille de verre intérieure 5.

La feuille de verre extérieure 3 présente une face extérieure 30 qui est orientée vers l'extérieur E, une face intercalaire 32 qui est orientée vers la feuille intercalaire de matière plastique 4, et un chant 31 situé entre ces deux faces.

La feuille de verre intérieure 5 présente une face intercalaire 50 qui est orientée vers la feuille intercalaire de matière plastique 4, une face intérieure 52 qui est orientée vers l'intérieur I et un chant 51 situé entre ces deux faces.

La feuille intercalaire de matière plastique 4 présente une face intercalaire extérieure 40 qui est orientée vers la face intercalaire 32 et qui est ici au contact de cette face intercalaire 32, une face intercalaire intérieure 42 qui est orientée vers la face intercalaire 50 et qui est ici au contact de cette face intercalaire 50, ainsi qu'un chant 41 qui est situé entre ces deux faces intercalaires 32, 42.

L'élément vitré 2 présente ainsi une face extérieure réalisée par la face extérieure 30 de la feuille de verre extérieure 3, une face intérieure réalisée par la face intérieure 52 de la feuille de verre intérieure 5 et un chant situé entre ces deux faces, correspondant au chant 31 de la feuille de verre extérieure 3 et au chant 51 de la feuille de verre intérieure 5, ces deux chants étant ici dans la continuité l'un de l'autre tout en étant séparés par un espace correspondant à l'épaisseur de la feuille de matière plastique 4.

Le vitrage 1 est destiné à être collé sur la feuillure 9 à l'aide d'un cordon de colle non illustré, qui est situé entre la face intérieure 52 de la feuille de verre intérieure et une partie adjacente de la feuillure 9.

Le vitrage 1 comporte, outre l'élément vitré 2, le long d'au moins une partie d'au moins un bord un cordon profilé 6 comportant une rainure 60 pour le clippage d'une pièce de couverture 7 sur ledit cordon profilé 6, ladite pièce de couverture 7 comportant, vue en coupe transversale, un harpon 70 pénétrant dans ladite rainure 60 lors du clippage.

La rainure 60 présente une embouchure et un fond : lors du clippage de la pièce de couverture 7, le harpon 70 pénètre dans la rainure 60 par l'embouchure et en direction du fond ; généralement, dans la position clippée, le harpon 70 ne touche pas le fond de la rainure.

L'embouchure de la rainure, par laquelle est introduit le harpon 70, est réalisée par deux avaloirs : un avaloir centrifuge 67, situé à gauche du harpon 70 sur la figure 1 et un avaloir centripète 68, situé à droite du harpon 70 sur cette même figure. Ces deux avaloirs ont pour but de guider le harpon 70 avec précision vers le fond de la rainure 60 lors du clippage du harpon 70.

La pièce de couverture 7 est destinée à être positionnée plus à l'extérieur que le cordon profilé 6 et à le couvrir au moins en partie lorsque le vitrage 1 est vu de l'extérieur E. Il s'agit ici, dans le cadre de l'application à un bord latéral d'un pare-brise, d'une pièce destinée à limiter la pénétration de l'eau et à l'enjoliver sur les côté du vitrage grâce à la présence d'une lèvre centripète 75 située contre la feuillure 9 et une lèvre centrifuge 76 située contre la face extérieure 30. Il peut s'agir d'un enjoliveur.

Le cordon profilé 6 comporte, vue en coupe transversale comme en figure 1, une aile intercalaire 61 qui est située entre la face intercalaire 32 de la feuille de verre extérieure 3 et la face intercalaire 50 de ladite feuille de verre intérieure 5.

Cette aile intercalaire 61 est au contact d'une part de la face intercalaire 32 de ladite feuille de verre extérieure 3 et d'autre part de la face intercalaire 50 de la feuille de verre intérieure 5 et s'étend entre ces deux faces.

Le long du bord de l'élément vitré comportant le cordon profilé 6 le chant 41 de la feuille intercalaire de matière plastique 4 est donc en retrait centripète par rapport aux chants 31, 51 respectivement de la feuille de verre extérieure et de la feuille de verre intérieure.

La figure 1 illustre un premier mode de réalisation de l'invention selon lequel la rainure 60 est latérale : la rainure 60 du cordon profilé s'étend le long du bord gauche de l'élément vitré, à côté du chant de l'élément vitré 2.

En outre, dans ce premier mode de réalisation, l'embouchure de la rainure est orientée vers l'extérieure.

Dans ce premier mode par ailleurs, les deux avaloirs sont situés plus à l'extérieur que la face extérieure 30 du verre extérieur ; ils sont situés au-dessus de cette face extérieure 30 lorsque le prolongement de cette face au-delà du chant 31 est considéré.

Le fond de la rainure 60 peut être situé plus à l'intérieur que la face intérieure 52 ; cela ne gêne pas le positionnement du vitrage dans la baie de la carrosserie car il y a de la place entre la face intérieure 52 et la feuillure 9 pour le cordon de colle (non illustré).

Les deux avaloirs de l'embouchure de la rainure sont chacun en forme de marteau avec les têtes presque en face l'une de l'autre, l'avaloir centrifuge 67 étant situé légèrement plus à l'extérieur que l'avaloir centripète 68.

Le harpon est double : il est constitué, vu en coupe transversale, de deux bossages orientés à l'opposé l'un de l'autre et décalé, le bossage centrifuge, destiné à venir sous l'avaloir centrifuge 67 étant situé légèrement plus à l'extérieur que le bossage centripète destiné à venir sous l'avaloir centripète 68.

Le clippage consiste ainsi en la pénétration du harpon 70 à l'intérieur de la rainure 60 et plus précisément des deux bossages du harpon à l'intérieur de la rainure 60 et sous les deux avaloirs.

Pour une retenue correcte, la largeur de l'embouchure, au plus court entre les deux avaloirs est inférieure à la largeur des deux bossages au plus large.

En figure 1, l'aile intercalaire 61 est une aile simple, réalisée dans le même matériau et venue de matière avec la rainure 60, sans renfort.

Comme visible sur cette figure 1, la totalité de la face extérieure de l'aile intercalaire 61 est au contact de la face intercalaire 32 de ladite feuille de verre extérieure 3 et la totalité de la face intérieure de l'aile intercalaire 61 est au contact de la face intercalaire 50 de la feuille de verre intérieure 5.

L'aile intercalaire 61 occupe ainsi l'espace situé en partant de l'aplomb sous le chant 31 de la feuille de verre extérieure et au-dessus du chant 52 de la feuille de verre intérieure et en direction de la feuille intercalaire de matière plastique 4 ; l'aile intercalaire présente ainsi une épaisseur identique à l'épaisseur de la feuille intercalaire de matière plastique 4 (en l'occurrence ici une épaisseur de 0,76 mm). Toutefois, elle n'entre pas en contact avec la feuille intercalaire de matière plastique 4 afin de ne pas perturber la cohésion réalisée par cette feuille intercalaire de matière plastique 4 avec les deux feuilles de verre, c'est-à-dire afin de ne pas perturber le feuilletage.

L'aile intercalaire 61 présente une largeur 1, illustrée en figure 2, comprise entre 2,0 et 6,0 mm, voire comprise entre 3,0 et 5,0 mm. Cette largeur est suffisante pour permettre un bon maintien de l'aile intercalaire entre la feuille de verre extérieure et la feuille de verre intérieure sans risquer de perturber la cohésion de la feuille intercalaire de matière plastique 4 avec les deux feuilles de verre.

L'élément vitré 2 est fabriqué avant la fixation du cordon profilé 6 à l'élément vitré 2, c'est-à-dire que le feuilletage des feuilles de verre 3, 5 avec la feuille de matière plastique afin de former un vitrage feuilleté est opéré avant la fixation du cordon profilé 6 à l'élément vitré 2.

Pour fixer le cordon profilé 6 à l'élément vitré 2, il faut :
- introduire l'aile intercalaire 61 dans l'espace entre la face intercalaire 32 de la feuille de verre extérieure et la face intercalaire 50 de la feuille de verre intérieure,
- puis faire adhérer le cordon profilé à l'élément vitré 2.

Cette adhésion peut être réalisée à l'aide d'une bande d'adhésion formée par une couche de colle ou un ruban adhésif et notamment un ruban adhésif double face.

Le cordon profilé 6 comporte, vu en coupe transversale, une aile extérieure 63 située au-dessus de la face extérieure 30 de la feuille de verre extérieure 3 ; l'aile extérieure 63 est ainsi plus à l'extérieur que la face extérieure 30.

Une bande d'adhésion 8 formée par une couche de colle ou un ruban adhésif double face est situé entre une partie centripète de l'aile extérieure 63 et la face extérieure 30.

Cette bande d'adhésion permet de fixer cette aile extérieure 63 à la face extérieure 30 sous-jacente.

Sur la figure 1, la rainure 60 présente une hauteur d'environ 7,8 mm et une largeur d'environ 5,5 mm ; l'aile intercalaire 61 présente une largeur l d'environ 5,0 mm, l'aile extérieure 63 présente une largeur d'environ 12 mm et la bande d'adhésion 8 présente une largeur d'environ 6 mm.

Sur la figure 1, il suffit que la pièce de couverture 7 déborde au-dessus de la face extérieure 30 sur une largeur l₇ d'environ 25 mm en partant du chant de l'élément vitré pour masquer à la fois l'aile extérieure 63, l'aile intercalaire 61 et le cordon de colle (non illustré) permettant la fixation du vitrage à la carrosserie.

Pour pouvoir maintenir l'aile extérieure 63 éloignée de la face extérieure 30 lors de l'introduction l'aile intercalaire 61 dans l'espace entre les deux feuilles de verre, l'aile extérieure 63 comporte une portion charnière 64 en une matière polymérique souple, présentant de préférence une largeur l₆₄, visible en figure 2, comprise entre 0,5 et 2,0 mm.

Cette portion de charnière permet de soulever l'aile extérieure 63 pour positionner la bande d'adhésion 8 (cas d'une couche de colle) ou activer la bande d'adhésion 8 (cas d'un ruban adhésif double face avec un film de protection provisoire qui peut être pelé) et permettre de fixer l'aile extérieure 63 à la face extérieure 30 sous-jacente. Ce mouvement de soulèvement est illustré par la flèche S en figure 2.

La figure 2 illustre par ailleurs une variante indépendante de la figure 1 selon la laquelle l'aile intercalaire 61 comporte un tenon plat 62, complètement intégré à l'intérieur de l'aile intercalaire 61 et qui n'entre en contact ni avec la face intercalaire 32 de la feuille de verre extérieure 3 ni avec la face intercalaire 50 de la feuille de verre intérieure 5, afin de rigidifier l'aile intercalaire 31.

Ce tenon est plat dans l'espace situé entre la face intercalaire 32 et la face intercalaire 50 mais présente un coude à l'aplomb du chant 31 de la feuille de verre extérieure 3 et se poursuit à l'intérieur de la matière constitutive de la rainure 60 dans la portion de cette rainure qui est contre ce chant 31, afin de rigidifier encore plus l'aile intercalaire 61.

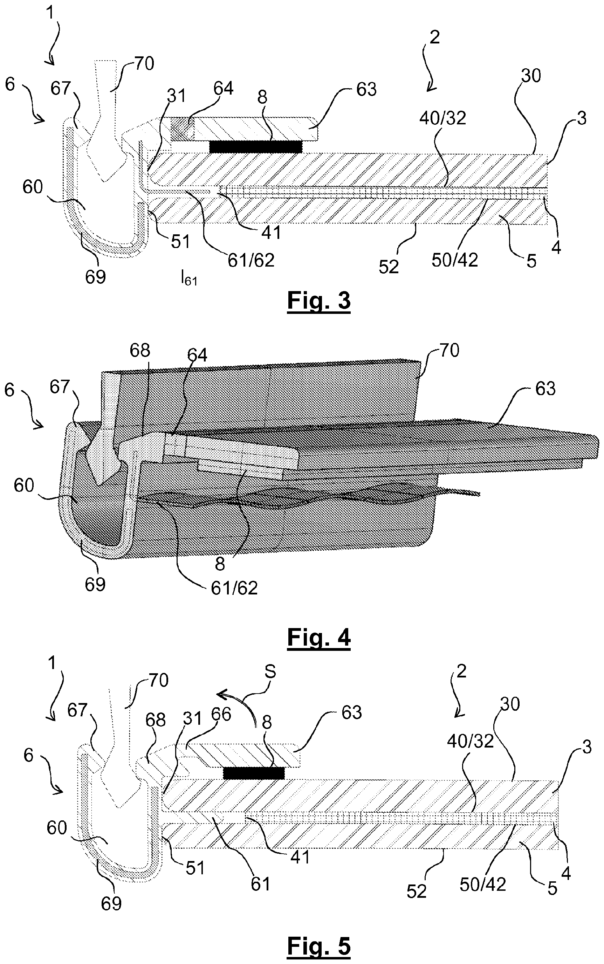

Dans une autre variante, illustrée aux figures 3 et 4 et indépendante de celle des figures 1 et 2, l'aile intercalaire 61 est constituée d'un tenon ondulé 62'. Ce tenon ondulé entre en contact, grâce à ses ondulations longitudinales, avec la face intercalaire 32 de la feuille de verre extérieure 3 et avec la face intercalaire 50 de la feuille de verre intérieure 5, afin de réaliser un maintien efficace de l'aile intercalaire entre ces deux faces.

Ce tenon ondulé présente un coude à l'aplomb du chant 31 de la feuille de verre extérieure 3 et s'étend à l'intérieur de la matière constitutive de la rainure 60, vers l'extérieur, dans la portion de cette rainure qui est contre ce chant 31, afin de rigidifier l'aile intercalaire 61.

La figure 5 illustre une variante indépendante des précédentes dans laquelle l'aile extérieure 63 comporte un rétrécissement de section 66, présentant de préférence une épaisseur de l'ordre de la moitié de l'épaisseur de ladite aile extérieure 63. Ce rétrécissement de section 66 permet, à la place de la portion charnière 64, de soulever l'aile extérieure 63 selon le mouvement de soulèvement illustré par la flèche S.

La portion charnière 64, tout comme le rétrécissement de section 66, permet de générer une zone de déformation élastique à la liaison entre la rainure 60 et l'aile extérieure 63.

Bien que cela ne soit pas illustré, pour cette première variante, le cordon profilé 6 pourrait comporter, vu en coupe transversale, une aile intérieure située en dessous (directement sous, ou indirectement sous et avec interposition/insertion d'une couche de colle ou d'un ruban adhésif) de la face intérieure 52 de ladite feuille de verre intérieure 5. Dans ce cas, cette aile intérieure comporte, de préférence, une portion charnière ou un rétrécissement de section.

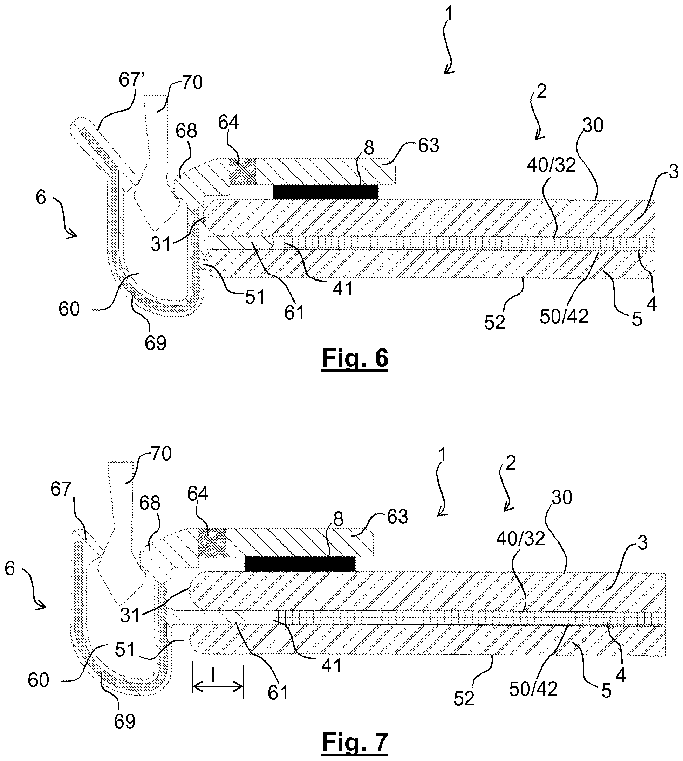

La figure 6 illustre une variante indépendante des précédentes dans laquelle un avaloir centrifuge allongé 67', plus long que l'avaloir centrifuge 67 des variantes précédentes, permet de réaliser un guidage du harpon 70 vers l'embouchure de la rainure 60.

Dans les variantes illustrées aux figures 1 à 11, la rainure 60 est située en vis-à-vis du chant 31 de ladite feuille de verre extérieure 3 et en vis-à-vis du chant 51 de ladite feuille de verre intérieure 5.

Dans les variantes illustrées aux figures 1 à 6, le cordon profilé 6 est situé contre le chant 31 de ladite feuille de verre extérieure 3.

Dans ces variantes, le cordon profilé 6 est situé contre le chant 51 de ladite feuille de verre intérieure 5.

Toutefois, il est possible que le cordon profilé 6 ne soit pas situé contre le chant 31 de la feuille de verre extérieure 3 et/ou ne soit pas situé contre le chant 51 de la feuille de ladite feuille de verre intérieure 5, comme visible en figure 7.

Dans cette variante, la rainure 60 présente ainsi une flexibilité par rapport à l'élément vitré 2 et plus précisément par rapport à l'aile intercalaire 61 :
- l'absence de contact avec le chant 31 permet une rotation de la rainure par rapport à l'aile intercalaire et en direction de ce chant lors du clippage, et
- l'absence de contact avec le chant 51 permet une rotation de la rainure par rapport à l'aile intercalaire et en direction de ce chant lors du clippage.

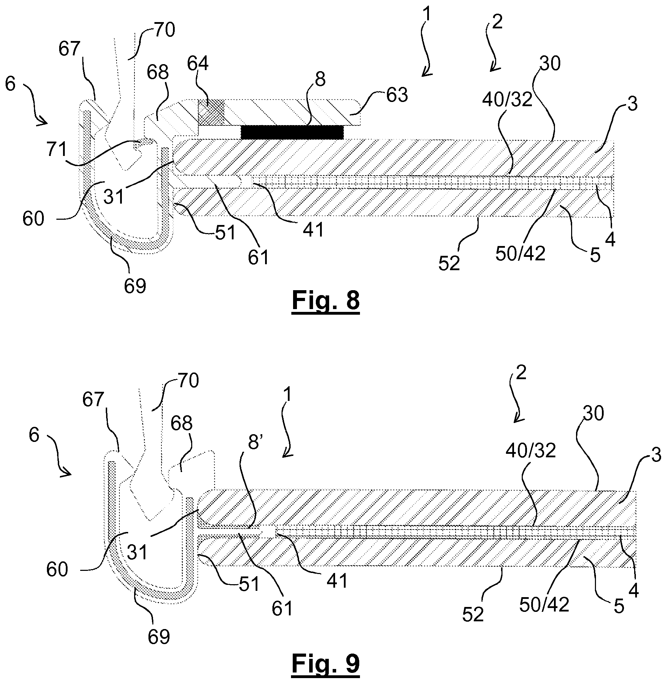

La figure 8 illustre une variante indépendante des précédentes dans laquelle le harpon 70 comporte, vue en coupe transversale, dans sa partie à l'intérieur de la rainure 60, une lèvre 71 orientée vers l'extérieur de ladite rainure 60. Cette lèvre 71 est située au-dessus du bossage centripète du harpon et vient de loger, lors du clippage, sous l'avaloir centripète 68.

Cette lèvre 71 peut être en un matériau différent de celui du harpon 70 et notamment en un matériau plus souple.

Cette lèvre permet de diminuer l'effort de clippage lors de l'introduction du harpon 70 dans la rainure 60 tout en augmentant l'effort nécessaire au déclippage.

La figure 9 illustre une variante indépendante des précédentes dans laquelle, vu en coupe transversale, la face extérieure 30 de la feuille de verre extérieure 3 est libre en vis-à-vis de la rainure 60 : le cordon profilé ne comporte pas d'aile extérieure.

En outre, la face intérieure 52 de la feuille de verre intérieure 5 est libre en vis-à-vis de la rainure 60: le cordon profilé ne comporte pas d'aile intérieure.

Par ailleurs, dans cette variante, la rainure 60 est la même qu'aux figures 5 à 8, mais l'aile intercalaire 61 est différente : elle présente une épaisseur inférieure à l'épaisseur entre la feuille de verre extérieure et la feuille de verre intérieure, c'est-à-dire inférieure à l'épaisseur de la feuille intercalaire de matière plastique 4.

Dans cette variante alternative, l'aile intercalaire 61 n'est pas au contact direct de la face intercalaire 32 de la feuille de verre extérieure et n'est pas au contact direct de la face intercalaire 50 de la feuille de verre intérieure : une matière adhésive 8', tel qu'un cordon de colle, est située entre l'aile intercalaire et la face intercalaire 32 de la feuille de verre extérieure et entre l'aile intercalaire et la face intercalaire 50 de la feuille de verre intérieure.

L'aile intercalaire 61 est ainsi au contact indirect de la face intercalaire 32 de la feuille de verre extérieure et est au contact indirect de la face intercalaire 50 de la feuille de verre intérieure.

Ainsi, l'aile intercalaire 61 est collée aux feuilles de verre ; bien que cela ne soit pas illustré, elle pourrait aussi être collée au chant 41 de la feuille intercalaire de matière plastique 4.

Il est possible par ailleurs que l'aile intercalaire soit au contact direct d'une face intercalaire 32, 52 et soit au contact indirect, par l'intermédiaire de la matière adhésive, de l'autre face intercalaire (respectivement 52, 32) .

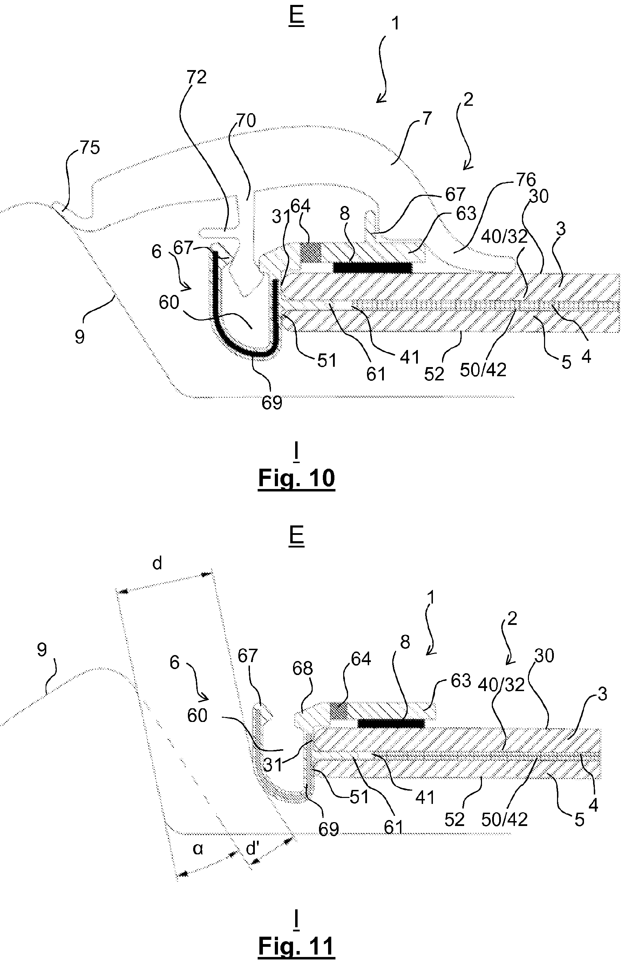

La figure 10 illustre une variante indépendante des précédentes dans laquelle le harpon 70 comporte, vue en coupe transversale, une butée frontale 72 située en dehors de ladite rainure 60.

Cette butée frontale 72 est ici centrifuge et se trouve contre l'avaloir centrifuge 67 lors du clippage, mais elle pourrait être centripète et se trouver contre l'avaloir centripète 68 lors du clippage ; elle a pour but de limiter la pénétration du harpon 70 à l'intérieur de la rainure 60.

La figure 10 montre par ailleurs que l'aile extérieure 63 peut comporter une butée supérieure 67 s'étendant perpendiculairement pour permettre le positionnement et la mise en référence de la pièce de couverture 7.

De préférence, comme visible sur les figures 1 à 11, le fond de la rainure 60 ne forme pas un U symétrique, mais un U asymétrique, avec un rayon de courbure plus grand du côté de la feuillure 9, qui permet de diminuer l'encombrement de la rainure vis-à-vis de la feuillure adjacente.

Plus particulièrement, l'utilisation d'une rainure à fond asymétrique avec un rayon de courbure plus grand du côté de la feuillure permet d'augmenter l'inclinaison de la feuillure dans sa partie adjacente au chant de l'élément vitré d'un angle α de l'ordre de 20 ° et diminuer alors la distance d entre la feuillure 9 et le fond centrifuge de la rainure, d'une valeur d'environ 9 mm à une valeur plus petite d' d'environ 4,5 mm. Cela représente un gain de place important et permet ainsi de rendre le système de clippage plus compact et d'augmenter la taille du vitrage.

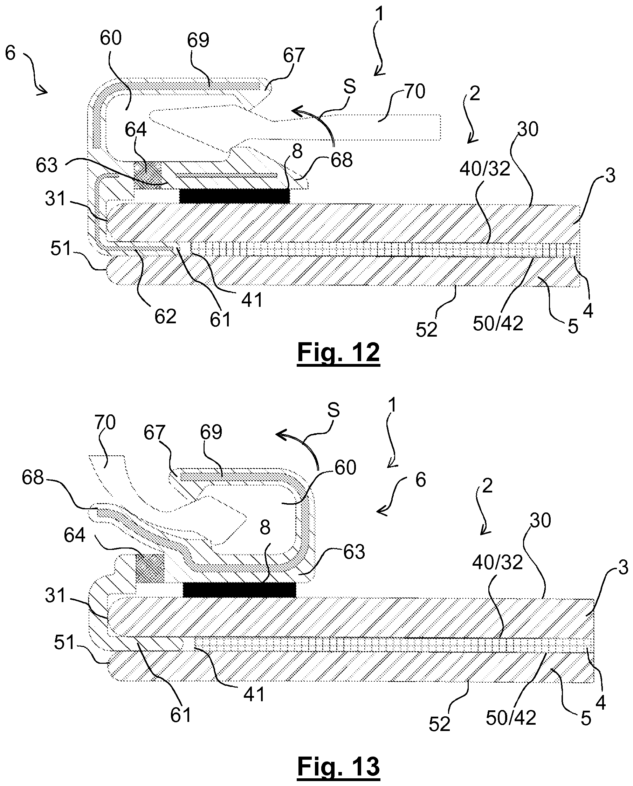

Sur la figure 12 est illustré un second mode de réalisation de l'invention selon lequel la rainure n'est plus latérale mais supérieure : la rainure 60 du cordon profilé n'est plus située à côté du chant de l'élément vitré 2, comme dans le premier mode et les figures 1 à 11, mais au-dessus de la face extérieure 30 de la feuille de verre extérieure 3, c'est-à-dire au-dessus de la face extérieure de l'élément vitré 2.

Bien sûr, comme pour le premier mode, dans ce second mode, le cordon profilé 6 comporte une aile intercalaire 61 qui est située entre la face intercalaire 32 de la feuille de verre extérieure 3 et ladite face intercalaire 50 de ladite feuille de verre intérieure 5.

Cette aile intercalaire 61 est au contact d'une part de la face intercalaire 32 de ladite feuille de verre extérieure 3 et d'autre part de la face intercalaire 50 de la feuille de verre intérieure 5.

Ainsi, la rainure 60 est venue de matière avec une aile extérieure 63 ; l'aile extérieure 63 porte la rainure 60 dont l'embouchure peut être centripète, comme visible en figure 12, ou peut être centrifuge, comme visible en figure 13.

Pour pouvoir maintenir l'aile extérieure 63 éloignée de la face extérieure 30 lors de l'introduction de l'aile intercalaire 61 dans l'espace entre les deux feuilles de verre, l'aile extérieure 63 comporte une portion charnière 64 en une matière polymérique souple, présentant de préférence une largeur l₆₄, comme celle visible en figure 2, comprise entre 0,5 et 2,0 mm.

Cette portion de charnière permet de soulever l'aile extérieure 63 pour positionner la bande d'adhésion 8 (cas d'une couche de colle) ou activer la bande d'adhésion 8 (cas d'un ruban adhésif double face avec un film de protection provisoire qui peut être pelé) et permettre de fixer l'aile extérieure 63 à la face extérieure 30 sous-jacente. Ce mouvement de soulèvement est illustré par la flèche S en figures 12 et 13.

En figure 12, le cordon profilé 6 présente, en coupe transversale, une forme de m tourné à 90 ° (c'est-à-dire, non pas horizontal, mais vertical par rapport aux faces extérieure, intérieure, de l'élément vitré). Un premier creux du m réalise la rainure 60 pour accueillir le harpon 70 de la pièce de couverture 7 et un deuxième creux du m enchâsse la feuille de verre extérieure 3, en venant de préférence contre le chant 31 de la feuille de verre extérieure 3.

En figure 13, le cordon profilé 6 présente, en coupe transversale, une forme de S inversé vu comme dans un miroir vertical (c'est-à-dire avec la boucle haute ouverte non pas vers la droite mais vers la gauche et la boucle basse ouverte alors vers la droite). Un premier creux du S inversé, le creux supérieur ouvert vers la gauche, réalise la rainure 60 pour accueillir le harpon 70 de la pièce de couverture 7 et un deuxième creux du S enchâsse la feuille de verre extérieure 3, en venant de préférence contre le chant 31 de la feuille de verre extérieure 3.

En figures 12 et 13, l'aile intercalaire 61 est une aile simple, similaire à celle de la figure 1, sans renfort. Elle n'entre pas en contact avec la feuille intercalaire de matière plastique 4.

Cette aile intercalaire 61 du second mode peut comporter un tenon plat, comme illustré en figure 2, pour la renforcer, ou comporter un tenon ondulé, comme illustré en figures 3 et 4.

Dans ce second mode, il est possible par ailleurs que l'aile extérieure 63 comporte un rétrécissement de section 66, comme illustré en figure 5.

Bien que cela ne soit pas illustré, pour ce second mode, le cordon profilé 6 pourrait comporter, vu en coupe transversale, une aile intérieure située en dessous (directement sous, ou indirectement sous et avec interposition/insertion d'une couche de colle ou d'un ruban adhésif) de la face intérieure 52 de ladite feuille de verre intérieure 5. Dans ce cas, cette aile intérieure comporte, de préférence, une portion charnière ou un rétrécissement de section.

Dans ce second mode, il est possible que la rainure 60 comporte un avaloir supérieur étendu, similaire à l'avaloir centrifuge étendu de la figure 6.

Dans ce second mode, il est possible que le cordon profilé 6 soit espacé du chant de l'élément vitré, comme illustré en figure 7, avec le cordon profilé 6 qui n'est pas en contact, avec le chant 31 de ladite feuille de verre extérieure 3, et/ou avec le chant 51 de ladite feuille de verre intérieure 5, afin de donner plus de souplesse au cordon profilé 6.

Dans ce second mode, alternativement ou cumulativement :
- le harpon 70 peut comporter une lèvre 71, comme illustré en figure 8 ;
- l'aile intercalaire 61 peut être collée, comme illustré en figure 9 ;
- le harpon 70 peut comporter une butée frontale 72 et/ou l'aile intérieure 65 peut comporter une butée, similaire à la butée supérieure 67 illustrée en figure 10 ;
- bien que cela ne soit pas illustré, le fond de la rainure 60 peut ne pas former pas un U symétrique, mais former un U asymétrique, avec un rayon de courbure plus grand du côté opposé à la face extérieure 30, qui permet de diminuer l'encombrement de la rainure vis-à-vis de la pièce de couverture.

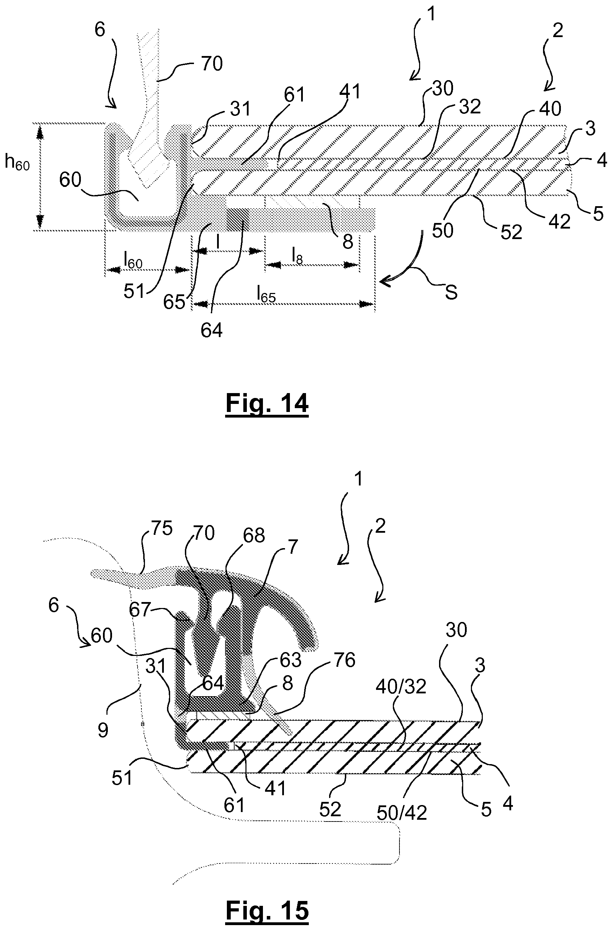

Sur la figure 14 est illustré un troisième mode de réalisation de l'invention selon lequel la rainure est latérale mais ne dépasse pas d'un plan artificiel considéré qui serait dans la continuité de la surface extérieure 30 de la feuille de verre extérieure 3 : le cordon profilé est affleurant avec la continuité de la surface extérieure 30 de la feuille de verre extérieure 3 ; il est « flush ».

Dans ce troisième mode de réalisation de l'invention, le cordon profilé ne dépasse pas plus à l'extérieur que la face extérieure 30 de la feuille de verre extérieure 3.

Dans cette troisième variante, il est ainsi possible que la pièce de couverture soit présente au-dessus de la rainure 60 mais ne dépasse pas en direction centripète au-delà du chant 31 au-dessus de la face extérieure 30, voire ne dépasse pas en direction centripète au-delà de l'avaloir centripète 67.

Il est possible que l'avaloir centripète 67 soit situé moins à l'extérieur que l'avaloir centrifuge 68 afin que lorsque la pièce de couverture 7 est clippée dans la rainure 60 une face extérieure de la pièce de couverture 7 soit dans la continuité de la surface extérieure 30 de la feuille de verre extérieure 3 ; la pièce de couverture est alors « flush » avec la feuille de verre extérieure 3.

Bien sûr, comme pour le premier mode, dans ce troisième mode, le cordon profilé 6 comporte une aile intercalaire 61 qui est située entre la face intercalaire 32 de la feuille de verre extérieure 3 et la face intercalaire 50 de ladite feuille de verre intérieure 5.

Cette aile intercalaire 61 est au contact d'une part de la face intercalaire 32 de ladite feuille de verre extérieure 3 et d'autre part de la face intercalaire 50 de la feuille de verre intérieure 5.

L'aile intercalaire 61 présente une largeur l, comprise entre 2,0 et 6,0 mm, voire comprise entre 3,0 et 5,0 mm. Cette largeur est suffisante pour permettre un bon maintien de l'aile intercalaire entre la feuille de verre extérieure et la feuille de verre intérieure sans risquer de perturber la cohésion de la feuille intercalaire de matière plastique 4.

Le cordon profilé 6 comporte, vu en coupe transversale, une aile intérieure 65 située en dessous de la face intérieure 52 de la feuille de verre intérieure 5 ; l'aile intérieure 65 est ainsi plus à l'intérieur que la face intérieure 52.

Une bande d'adhésion 8 formée par une couche de colle ou un ruban adhésif double face est situé entre une partie centripète de l'aile intérieure 65 et la face intérieure 52.

Cette bande d'adhésion permet de fixer cette aile intérieure 65 à la face intérieure 52 sus-jacente.

Pour pouvoir maintenir l'aile intérieure 65 éloignée de la face intérieure 52 lors de l'introduction l'aile intercalaire 61 dans l'espace entre les deux feuilles de verre, l'aile intérieure 65 comporte une portion charnière 64 en une matière polymérique souple.

Cette portion de charnière permet de soulever l'aile intérieure 65 pour positionner la bande d'adhésion 8 (cas d'une couche de colle) ou activer la bande d'adhésion 8 (cas d'un ruban adhésif double face avec un film de protection provisoire qui peut être pelé) et permettre de fixer l'aile intérieure 65 à la face intérieure 52 sus-jacente. Ce mouvement de soulèvement est illustré par la flèche S en figure 14.

En figure 14, l'aile intercalaire 61 est une aile simple, similaire à celle de la figure 1, sans renfort. Elle n'entre pas en contact avec la feuille intercalaire de matière plastique 4.

Cette aile intercalaire 61 du troisième mode peut comporter un tenon plat, comme illustré en figure 2, pour la renforcer, ou comporter un tenon ondulé, comme illustré en figures 3 et 4.

Dans ce troisième mode, il est possible par ailleurs que l'aile intérieure 65 comporte un rétrécissement de section 66, comme illustré en figure 5 ; Un rétrécissement de section, tout comme une portion charnière, permet de générer une zone de déformation élastique à la liaison entre la rainure 60 et l'aile intérieure 65.

Dans ce troisième mode, il est possible que la rainure 60 comporte un avaloir centrifuge allongé, similaire à l'avaloir centrifuge allongé de la figure 6.

Dans ce troisième mode, il est possible que le cordon profilé 6 soit espacé du chant de l'élément vitré, comme illustré en figure 7, avec le cordon profilé 6 qui n'est pas en contact avec le chant 31 de ladite feuille de verre extérieure 3 et/ou avec le chant 51 de ladite feuille de verre intérieure 5, afin de donner plus de souplesse au cordon profilé 6.

Dans ce troisième mode, alternativement ou cumulativement :
- le harpon 70 peut comporter une lèvre 71, comme illustré en figure 8 ;
- l'aile intercalaire 61 peut être collée, comme illustré en figure 9 ;
- le harpon 70 peut comporter une butée frontale 72 et/ou l'aile intérieure 65 peut comporter une butée, similaire à la butée supérieure 67 illustrée en figure 10 ;
- bien que cela ne soit pas visible sur la figure 14, le fond de la rainure 60 peut ne pas former pas un U symétrique, mais former un U asymétrique, avec un rayon de courbure plus grand du côté de la feuillure, qui permet de diminuer l'encombrement de la rainure vis-à-vis de la feuillure adjacente, comme illustré en figure 11, avec les avantages décrits pour cette figure.

Sur la figure 14, la rainure 60 présente une hauteur h₆₀ d'environ 6,8 mm et une largeur l₆₀ d'environ 5,5 mm ; l'aile intercalaire 61 présente une largeur l de 5,0 mm, l'aile intérieure 65 présente une largeur l₆₅ d'environ 12 mm et la bande d'adhésion 8 présente une largeur l₈ d'environ 6 mm.

Sur cette figure, une bande de masquage (non illustrée) située plus à l'extérieur que l'aile intercalaire et d'une largeur de 20 mm en partant du chant de l'élément vitré suffira à masquer à la fois l'aile intercalaire et le cordon de colle (non illustré) permettant la fixation du vitrage à la carrosserie.

La figure 15 illustre la possibilité de réaliser un cordon profilé 6 à rainure 60 supérieure qui est située sur l'aile extérieure 63 qui est elle-même collée à la face extérieure 30 de la feuille de verre extérieure 3 grâce à la bande d'adhésion 8.

Comme en figure 10, la pièce de couverture 7 est un enjoliveur comportant une lèvre centripète 75 s'étendant contre la feuillure 9 et une lèvre centrifuge 76 s'étendant contre la face extérieure 30 (ces deux lèvres sont illustrée dans une situation virtuelle correspondant à la forme du cordon profilé 6 selon cette variante lorsque le cordon est observé seul, sans élément vitré et sans feuillure).

Sur cette figure 15 par ailleurs, le gris foncé illustre l'utilisation d'une matière plastique rigide, comme du polypropylène et le gris clair illustre l'utilisation d'une matière plastique souple, comme du TPE ; les deux lèvres ainsi que la portion charnière 64 qui est située en vis-à-vis de l'arête entre la face extérieure 30 et le chant 31 de la feuille de verre extérieure 3 sont chacune en matière plastique souple.

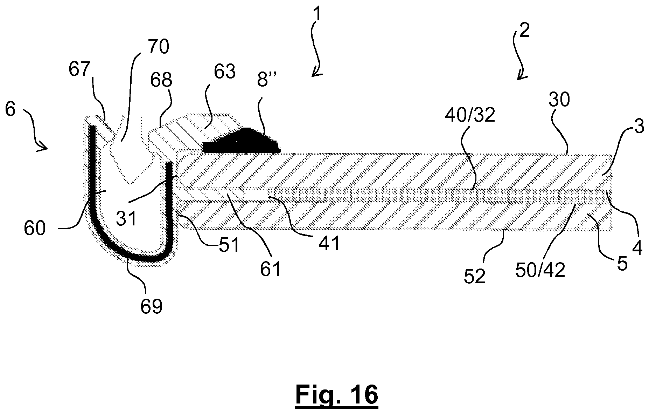

La figure 16 illustre une possibilité de réaliser un cordon profilé 6 à rainure 60 latérale et aile extérieure 63 mais sans portion charnière. Pour cela, l'aile extérieure 63 est collée contre la face extérieure 30 de la feuille de verre extérieure 3 à l'aide d'un cordon de colle extérieur 8" qui pénètre au moins en partie entre d'une part une partie centripète de l'aile extérieure qui est amincie par rapport au reste de l'aile extérieure et d'autre part la face extérieure 30. Ce cordon de colle extérieur 8" est appliqué après le positionnement du cordon profilé 6 en vis-à-vis du chant de l'élément vitré (cette étape de positionnement comprenant l'introduction de l'aile intercalaire 41 entre la feuille de verre extérieure et la feuille de verre intérieure).

Bien que cela ne soit pas représenté, dans une variante du premier mode ou du troisième mode, la face extérieure 30 de la feuille de verre extérieure 3 peut être libre en vis-à-vis de la rainure 60 et la face intérieure 52 de la feuille de verre intérieure 5 peut être libre en vis-à-vis de la rainure 60 ; dans ce cas, le cordon profil 6 ne comporte ni aile extérieure, ni aile intérieure. Pour que l'aile intercalaire 61 tienne correctement le cordon profilé, elle présente alors une épaisseur inférieure à l'épaisseur de la feuille intercalaire de matière plastique 4 et est collé entre la face intercalaire 32 et la face intercalaire 50 de la même façon qu'en figure 9.

Quel que soit le mode de réalisation, la matière constitutive de la rainure 60 peut être renforcée par la présence, à l'intérieur, d'un insert 69, comme par exemple un insert métallique, qui permet d'augmenter la rigidité de la rainure. Cet insert peut être par exemple un profilé en aluminium d'une épaisseur de 0,4 mm.

La présente invention est susceptible de s'appliquer à n'importe quel vitrage et en particulier à n'importe quel vitrage de véhicule. Elle peut s'appliquer à n'importe quel bord de ce vitrage : gauche, droit, haut ou bas et en particulier à plusieurs de ces bords à la fois, voire à tous ces bords à la fois. Elle peut s'appliquer en particulier au clippage, en partie basse d'un pare-brise de véhicule, d'une pièce de couverture en matière plastique appelée parfois « boîte à eau » ou « grille d'auvent ».

Le cordon profilé 6 peut être situé le long de deux bords latéraux de l'élément vitré 2 et/ou le long d'un bord supérieur de l'élément vitré. Il peut ne pas être situé le long d'un bord bas, en particulier lorsque le vitrage est un pare-brise de véhicule et que le vitrage comporte un autre type de cordon profilé le long du bord bas.

## Revendications

1. Vitrage (1) et notamment vitrage de véhicule, comprenant un élément vitré (2) feuilleté comprenant une feuille de verre extérieure (3), une feuille de verre intérieure (5) et une feuille intercalaire de matière plastique (4) située entre lesdites deux feuilles de verre,
ladite feuille de verre extérieure (3) présentant une face extérieure (30), un chant (31) et une face intercalaire (32) qui est orientée vers ladite feuille intercalaire de matière plastique (4),
ladite feuille de verre intérieure (5) présentant une face intercalaire (50) qui est orientée vers ladite feuille intercalaire de matière plastique (4), un chant (51) et une face intérieure (52),
ledit vitrage (1) comportant le long d'au moins une partie d'au moins un bord un cordon profilé (6) comportant une rainure (60) pour le clippage d'une pièce de couverture (7) sur ledit cordon profilé (6), ladite pièce de couverture (7) comportant, vue en coupe transversale, un harpon (70) pénétrant dans ladite rainure (60) lors du clippage,
**caractérisé en ce que** ledit cordon profilé (6) comporte, vu en coupe transversale, une aile intercalaire (61) située entre ladite face intercalaire (32) de ladite feuille de verre extérieure (3) et ladite face intercalaire (50) de ladite feuille de verre intérieure (5), ladite aile intercalaire (61) n'entrant pas en contact avec ledit chant (41) de ladite feuille intercalaire de matière plastique (4).

2. Vitrage suivant la revendication 1, **caractérisé en ce que** ladite aile intercalaire (61) présente une largeur (1) comprise entre 2,0 et 10,0 mm, voire comprise entre 2,0 et 6,0 mm, voire comprise entre 3,0 et 5,0 mm.

3. Vitrage suivant la revendication 1 ou la revendication 2, **caractérisé en ce que** ladite aile intercalaire (61) est venue de matière avec ladite rainure (60) et comporte, de préférence, un tenon plat (62) qui n'entre en contact ni avec ladite face intercalaire (32) de ladite feuille de verre extérieure (3) ni avec ladite face intercalaire (50) de ladite feuille de verre intérieure (5).

4. Vitrage suivant la revendication 1 ou la revendication 2, **caractérisé en ce que** ladite aile intercalaire (61) est constituée d'un tenon ondulé (62'), ledit tenon ondulé s'étendant, de préférence à l'intérieur de la matière constitutive de ladite rainure (60).

5. Vitrage suivant l'une quelconque des revendications 1 à 4, **caractérisé en ce que** ledit cordon profilé (6) est situé contre ledit chant (31) de ladite feuille de verre extérieure (3).

6. Vitrage suivant l'une quelconque des revendications 1 à 5, **caractérisé en ce que** ledit cordon profilé (6) est situé contre ledit chant (51) de ladite feuille de verre intérieure (5).

7. Vitrage suivant l'une quelconque des revendications 1 à 6, **caractérisé en ce que** ledit cordon profilé (6) est situé le long de deux bords latéraux dudit élément vitré (2) et/ou le long d'un bord supérieur dudit élément vitré (2) .

8. Vitrage suivant l'une quelconque des revendications 1 à 7, **caractérisé en ce que** ladite aile intercalaire (61) présente une épaisseur égale à l'épaisseur entre ladite feuille de verre extérieure (3) et ladite feuille de verre intérieure (5) et en particulier égale à l'épaisseur de ladite feuille intercalaire de matière plastique (4) et notamment égale à 0,76 mm.

9. Vitrage suivant l'une quelconque des revendications 1 à 7, **caractérisé en ce que** ladite aile intercalaire (61) présente une épaisseur inférieure à l'épaisseur entre ladite feuille de verre extérieure (3) et ladite feuille de verre intérieure (5).

10. Vitrage suivant l'une quelconque des revendications 1 à 9, **caractérisé en ce que** ladite rainure (60) est située en vis-à-vis du chant (31) de ladite feuille de verre extérieure (3) et/ou en vis-à-vis du chant (51) de ladite feuille de verre intérieure (5).

11. Vitrage suivant l'une quelconque des revendications 1 à 9, **caractérisé en ce que** ladite rainure (60) est située au-dessus de ladite face extérieure (30) de ladite feuille de verre extérieure (3).

12. Vitrage suivant la revendication 11, **caractérisé en ce que** ledit cordon profilé (6) présente, en coupe transversale, une forme de m tourné à 90 °, avec un premier creux du m pour accueillir le harpon (70) de ladite pièce de couverture (7) et un deuxième creux du m qui enchâsse ladite feuille de verre extérieure (3).

13. Vitrage suivant l'une quelconque des revendications 1 à 12, **caractérisé en ce que** ledit cordon profilé (6) comporte, vu en coupe transversale, une aile extérieure (63) située au-dessus de ladite face extérieure (30) de ladite feuille de verre extérieure (3).

14. Vitrage suivant l'une quelconque des revendications 1 à 13, **caractérisé en ce que** ledit cordon profilé (6) comporte, vu en coupe transversale, une aile intérieure (65) située en dessous de ladite face intérieure (52) de ladite feuille de verre intérieure (5).

15. Vitrage suivant la revendication 13 ou 14, **caractérisé en ce que** ladite aile extérieure (63) et/ou ladite aile intérieure (65) comporte une portion charnière (64) en une matière polymérique souple, présentant de préférence une largeur l₆₄ comprise entre 0,5 et 2,0 mm.

16. Vitrage suivant la revendication 13 ou 14, **caractérisé en ce que** ladite aile extérieure (63) et/ou ladite aile intérieure (65) comporte un rétrécissement de section (66), présentant de préférence une épaisseur de l'ordre de la moitié de l'épaisseur de ladite aile extérieure (63) et/ou de ladite aile intérieure (65) qui le porte.

17. Vitrage suivant l'une quelconque des revendications 13 à 15, **caractérisé en ce que** ladite aile extérieure (63) comporte une butée supérieure (67) s'étendant perpendiculairement.

18. Vitrage suivant l'une quelconque des revendications 1 à 10, **caractérisé en ce que,** vu en coupe transversale, ladite face extérieure (30) de ladite feuille de verre extérieure (3) est libre en vis-à-vis de ladite rainure (60) et ladite face intérieure (52) de ladite feuille de verre intérieure (5) est libre en vis-à-vis de ladite rainure (60).

19. Vitrage suivant l'une quelconque des revendications 1 à 18, **caractérisé en ce que** ledit harpon (70) comporte, vue en coupe transversale, une lèvre (71) orientée vers l'extérieur de ladite rainure (60), ladite lèvre étant de préférence en un matériau différent de celui dudit harpon (70).

20. Vitrage suivant l'une quelconque des revendications 1 à 19, **caractérisé en ce que** ledit harpon (70) comporte, vue en coupe transversale, une butée frontale (72) située en dehors de ladite rainure (60).

21. Vitrage suivant l'une quelconque des revendications 1 à 20, **caractérisé en ce que** ladite rainure (60) comporte un fond qui forme un U asymétrique, avec un rayon de courbure plus grand d'un côté.

## Patentansprüche

1. Glasscheibe (1) und insbesondere Fahrzeugglasscheibe, umfassend ein Verbundglaselement (2), umfassend eine äußere Glasplatte (3), eine innere Glasplatte (5) und eine zwischen den Glasplatten liegende Kunststoffzwischenseite (4),
wobei die äußere Glasplatte (3) eine Außenseite (30), einen Rand (31) und eine Zwischenseite (32) aufweist, die der Kunststoffzwischenseite (4) zugewandt ist,
wobei die innere Glasplatte (5) eine der Kunststoffzwischenseite (4) zugewandte Zwischenseite (50), einen Rand (51) und eine Innenseite (52) aufweist,
wobei die Glasscheibe (1) entlang mindestens eines Abschnitts von mindestens einer Kante einen profilierten Wulst (6) mit einer Nut (60) aufweist, um ein Abdeckteil (7) an dem profilierten Wulst (6) einzuklemmen, wobei das Abdeckteil (7) im Querschnitt eine Harpune (70) umfasst, die während des Einklemmens in die Nut (60) eindringt,
**dadurch gekennzeichnet, dass** der profilierte Wulst (6) im Querschnitt einen Zwischenschenkel (61) umfasst, der zwischen der Zwischenseite (32) der äußeren Glasplatte (3) und der Zwischenseite (50) der inneren Glasplatte (5) angeordnet ist, wobei der Zwischenschenkel (61) nicht mit dem Rand (41) der Kunststoffzwischenseite (4) in Kontakt kommt.

2. Glasscheibe nach Anspruch 1, **dadurch gekennzeichnet, dass** der Zwischenschenkel (61) eine Breite (1) zwischen 2,0 und 10,0 mm oder sogar zwischen 2,0 und 6,0 mm oder sogar zwischen 3,0 und 5,0 mm aufweist.

3. Glasscheibe nach Anspruch 1 oder 2, **dadurch gekennzeichnet, dass** der Zwischenschenkel (61) einstückig mit der Nut (60) ausgebildet ist und vorzugsweise einen flachen Zapfen (62) aufweist, der weder mit der Zwischenseite (32) der äußeren Glasplatte (3) noch mit der Zwischenseite (50) der inneren Glasplatte (5) in Kontakt kommt.

4. Glasscheibe nach Anspruch 1 oder 2, **dadurch gekennzeichnet, dass** der Zwischenschenkel (61) aus einem gewellten Zapfen (62') besteht, wobei sich der gewellte Zapfen vorzugsweise innerhalb des Materials erstreckt, aus dem die Nut (60) besteht.

5. Glasscheibe nach einem der Ansprüche 1 bis 4, **dadurch gekennzeichnet, dass** der profilierte Wulst (6) an dem Rand (31) der äußeren Glasplatte (3) anliegt.

6. Glasscheibe nach einem der Ansprüche 1 bis 5, **dadurch gekennzeichnet, dass** der profilierte Wulst (6) an dem Rand (51) der inneren Glasplatte (5) anliegt.

7. Glasscheibe nach einem der Ansprüche 1 bis 6, **dadurch gekennzeichnet, dass** der profilierte Wulst (6) entlang zweier seitlicher Kanten des Glaselements (2) und/oder entlang einer oberen Kante des Glaselements (2) angeordnet ist.

8. Glasscheibe nach einem der Ansprüche 1 bis 7, **dadurch gekennzeichnet, dass** der Zwischenschenkel (61) eine Dicke aufweist, die der Dicke zwischen der äußeren Glasplatte (3) und der inneren Glasplatte (5) entspricht und insbesondere der Dicke der Kunststoffzwischenseite (4) entspricht und insbesondere 0,76 mm entspricht.

9. Glasscheibe nach einem der Ansprüche 1 bis 7, **dadurch gekennzeichnet, dass** der Zwischenschenkel (61) eine Dicke aufweist, die geringer ist als die Dicke zwischen der äußeren Glasplatte (3) und der inneren Glasplatte (5).

10. Glasscheibe nach einem der Ansprüche 1 bis 9, **dadurch gekennzeichnet, dass** die Nut (60) gegenüber dem Rand (31) der äußeren Glasplatte (3) und/oder gegenüber dem Rand (51) der inneren Glasplatte (5) angeordnet ist.

11. Glasscheibe nach einem der Ansprüche 1 bis 9, **dadurch gekennzeichnet, dass** die Nut (60) über der Außenseite (30) der äußeren Glasplatte (3) angeordnet ist.

12. Glasscheibe nach Anspruch 11, **dadurch gekennzeichnet, dass** der profilierte Wulst (6) im Querschnitt eine um 90° gedrehte m-Form mit einer ersten Vertiefung des m aufweist, um die Harpune (70) des Abdeckteils (7) aufzunehmen, und eine zweite Vertiefung des m, die die äußere Glasplatte (3) umgibt.

13. Glasscheibe nach einem der Ansprüche 1 bis 12, **dadurch gekennzeichnet, dass** der profilierte Wulst (6) im Querschnitt einen Außenschenkel (63) umfasst, der über der Außenseite (30) der äußeren Glasplatte (3) angeordnet ist.

14. Glasscheibe nach einem der Ansprüche 1 bis 13, **dadurch gekennzeichnet, dass** der profilierte Wulst (6) im Querschnitt einen Innenschenkel (65) umfasst, der unter der Innenseite (52) der inneren Glasplatte (5) angeordnet ist.

15. Glasscheibe nach Anspruch 13 oder 14, **dadurch gekennzeichnet, dass** der Außenschenkel (63) und/oder der Innenschenkel (65) einen Gelenkabschnitt (64) aus einem flexiblen Polymermaterial aufweist, der vorzugsweise eine Breite l₆₄ zwischen 0,5 und 2,0 mm aufweist.

16. Glasscheibe nach Anspruch 13 oder 14, **dadurch gekennzeichnet, dass** der Außenschenkel (63) und/oder der Innenschenkel (65) einen Verengungsabschnitt (66) aufweist, der vorzugsweise eine Dicke von etwa der Hälfte der Dicke des Außenschenkels (63) und/oder des Innenschenkels (65) aufweist, der ihn trägt.

17. Glasscheibe nach einem der Ansprüche 13 bis 15, **dadurch gekennzeichnet, dass** der Außenschenkel (63) einen oberen Anschlag (67) aufweist, der sich senkrecht erstreckt.

18. Glasscheibe nach einem der Ansprüche 1 bis 10, **dadurch gekennzeichnet, dass** die Außenseite (30) der äußeren Glasplatte (3) im Querschnitt gegenüber der Nut (60) frei ist und die Innenseite (52) der inneren Glasplatte (5) gegenüber der Nut (60) frei ist.

19. Glasscheibe nach einem der Ansprüche 1 bis 18, **dadurch gekennzeichnet, dass** die Harpune (70) im Querschnitt eine Lippe (71) aufweist, die von der Nut (60) nach außen weist, wobei die Lippe bevorzugt aus einem Material besteht, das sich von dem der Harpune (70) unterscheidet.

20. Glasscheibe nach einem der Ansprüche 1 bis 19, **dadurch gekennzeichnet, dass** die Harpune (70) im Querschnitt einen vorderen Anschlag (72) aufweist, der außerhalb der Nut (60) angeordnet ist.

21. Glasscheibe nach einem der Ansprüche 1 bis 20, **dadurch gekennzeichnet, dass** die Nut (60) einen Boden aufweist, der ein asymmetrisches U mit einem größeren Krümmungsradius auf einer Seite bildet.

## Claims

1. A glazing (1) and notably a vehicle glazing, comprising a laminated glazed element (2) comprising an outside sheet of glass (3), an inside sheet of glass (5) and an interlayer sheet of plastic (4) situated between said two sheets of glass,
said outside sheet of glass (3) having an outside face (30), an edge face (31) and an interlayer face (32) which is oriented toward said interlayer sheet of plastic (4),
said inside sheet of glass (5) having an interlayer face (50) which is oriented toward said interlayer sheet of plastic (4), an edge face (51) and an inside face (52),
said glazing (1) comprising along at least part of at least one edge a profiled beading (6) comprising a groove (60) for clip-fastening a cover piece (7) onto said profiled beading (6), said cover piece (7) comprising, viewed in cross section, a barbed hook (70) that enters said groove (60) at the time of clip-fastening,
**characterized in that** said profiled beading (6) comprises, when viewed in cross section, an interlayer flange (61) situated between said interlayer face (32) of said outside sheet of glass (3) and said interlayer face (50) of said inside sheet of glass (5), said interlayer flange (61) does not come into contact with said edge face (41) of said interlayer sheet of plastic (4).

2. The glazing as claimed in claim 1, **characterized in that** said interlayer flange (61) has a width (1) comprised between 2.0 and 10.0 mm, or even comprised between 2.0 and 6.0 mm, or even comprised between 3.0 and 5.0 mm.

3. The glazing as claimed in claim 1 or claim 2,
**characterized in that** said interlayer flange (61) is formed as an integral part of said groove (60) and preferably comprises a flat tenon (62) that comes into contact neither with said interlayer face (32) of said outside sheet of glass (3) nor with said interlayer face (50) of said inside sheet of glass (5).

4. The glazing as claimed in claim 1 or claim 2,
**characterized in that** said interlayer flange (61) is made of a corrugated tenon (62'), said corrugated tenon preferably extending into the material of which said groove (60) is made.

5. The glazing as claimed in any one of claims 1 to 4,
**characterized in that** said profiled beading (6) is situated against said edge face (31) of said outside sheet of glass (3) .

6. The glazing as claimed in any one of claims 1 to 5,
**characterized in that** said profiled beading (6) is situated against said edge face (51) of said inside sheet of glass (5) .

7. The glazing as claimed in any one of claims 1 to 6,
**characterized in that** said profiled beading (6) is situated along two lateral edges of said glazed element (2) and/or along an upper edge of said glazed element (2).

8. The glazing as claimed in any one of claims 1 to 7,
**characterized in that** said interlayer flange (61) has a thickness equal to the thickness between said outside sheet of glass (3) and said inside sheet of glass (5) and, in particular, equal to the thickness of said interlayer sheet of plastic (4) and notably equal to 0.76 mm.

9. The glazing as claimed in any one of claims 1 to 7,
**characterized in that** said interlayer flange (61) has a thickness less than the thickness between said outside sheet of glass (3) and said inside sheet of glass (5).

10. The glazing as claimed in any one of claims 1 to 9,
**characterized in that** said groove (60) is situated facing the edge face (31) of said outside sheet of glass (3) and/or facing the edge face (51) of said inside sheet of glass (5).

11. The glazing as claimed in any one of claims 1 to 9,
**characterized in that** said groove (60) is situated above said outside face (30) of said outside sheet of glass (3).

12. The glazing as claimed in claim 11, **characterized in that** said profiled beading (6) has, in cross section, the shape of an m rotated through 90°, with a first cavity of the m to accommodate the barbed hook (70) of said cover piece (7) and a second cavity of the m to straddle said outside sheet of glass (3).

13. The glazing as claimed in any one of claims 1 to 12, **characterized in that** said profiled beading (6) comprises, when viewed in cross section, an outside flange (63) situated above said outside face (30) of said outside sheet of glass (3).

14. The glazing as claimed in any one of claims 1 to 13, **characterized in that** said profiled beading (6) comprises, when viewed in cross section, an inside flange (65) situated below said inside face (52) of said inside sheet of glass (5).

15. The glazing as claimed in claim 13 or 14,
**characterized in that** said outside flange (63) and/or said inside flange (65) comprises a hinge portion (64) made of a flexible polymer material, preferably having a width l₆₄ comprised between 0.5 and 2.0 mm.

16. The glazing as claimed in claim 13 or 14,
**characterized in that** said outside flange (63) and/or said inside flange (65) comprises a narrowing of section (66), preferably having a thickness of the order of half the thickness of said outside flange (63) and/or of said inside flange (65) which bears it.

17. The glazing as claimed in any one of claims 13 to 15, **characterized in that** said outside flange (63) comprises an upper end stop (67) extending at right angles.

18. The glazing as claimed in any one of claims 1 to 10, **characterized in that,** viewed in cross section, said outside face (30) of said outside sheet of glass (3) is free in relation to said groove (60) and said inside face (52) of said inside sheet of glass (5) is free in relation to said groove (60).

19. The glazing as claimed in any one of claims 1 to 18, **characterized in that** said barbed hook (70) comprises, viewed in cross section, a lip (71) oriented toward the outside of said groove (60), said lip preferably being made in material different than that of said barbed hook (70).

20. The glazing as claimed in any one of claims 1 to 19, **characterized in that** said barbed hook (70) comprises, viewed in cross section, a frontal end stop (72) situated outside of said groove (60).

21. The glazing as claimed in any one of claims 1 to 20, **characterized in that** said groove (60) comprises a bottom which forms an asymmetric U with a larger radius of curvature on one side.
